# EUROPEAN PATENT SPECIFICATION

(11) **EP 2 554 408 B1**
(45) Date of publication and mention of the grant of the patent: **09.08.2017**
(21) Application number: 11762249.8
(22) Date of filing: 29.03.2011
(51) Int. Cl.: B60G 17/015, B60G 3/20, B60G 7/00, B62D 17/00

(54) **CAMBER ANGLE ADJUSTMENT DEVICE**
VORRICHTUNG ZUR EINSTELLUNG EINES KRÜMMUNGSWINKELS
DISPOSITIF D'AJUSTEMENT D'ANGLE DE CARROSSAGE

(30) Priority: 28.04.2010 JP 2010103540; 31.03.2010 JP 2010081092
(43) Date of publication of application: 06.02.2013
(73) Proprietor: Equos Research Co., Ltd., Chiyoda-ku Tokyo 101-0021 (JP)
(72) Inventor: HORIGUCHI, Munehisa, Tokyo 101-0021 (JP); MIZUNO, Akira, Tokyo 101-0021 (JP); ANDO, Masao, Tokyo 101-0021 (JP); OZAKI, Kazuhisa, Anjo-shi Aichi 444-1192 (JP); HASEBE, Masahiro, Tokyo 101-0021 (JP); OKADA, Masaki, Tokyo 101-0021 (JP); ABE, Minoru, Tokyo 101-0021 (JP); ISOGAI, Kazuo, Tokyo 101-0021 (JP); ANDO, Yosuke, Tokyo 101-0021 (JP)
(74) Representative: TBK
(86) International application number: PCT/JP2011/001866
(87) International publication number: WO 2011/122002

(56) References cited:
- FR-A1- 2 851 539
- JP-A- 2005 104 225
- JP-A- 2007 278 123
- JP-A- 2009 132 377

## Description

### TECHNICAL FIELD

The present invention relates to camber angle adjusting devices capable of changing the camber angle of a vehicle wheel with a simple structure.

### BACKGROUND ART

Conventionally, there are camber angle adjusting devices that change the camber angle of a vehicle wheel with respect to a vehicle body in order to implement stable running of a vehicle by causing the vehicle wheel to have a negative camber. As such camber angle adjusting devices, there is a type of camber angle adjusting device that uses a lever crank mechanism to reduce load on an actuator and to ensure strength (Patent Document 1)
Furthermore, a technique is known in which an articulation bearing is coupled to a wheel support and linked with an articulation axle rotatably mounted on support bearings coupled to a fitting fixed to the body shell of the vehicle. Rotational movement of the articulation axle generates a movement of the articulation bearing. The axle of a gear motor is engaged with the articulation axle. A drive axle is coupled with the gear motor axle by a set of toothed gears. Independent claims are also included for the following: (a) a rear end of a vehicle including a longitudinal arm and two transversal tie-rods associated with the articulation bearing; and (b) a vehicle comprising electric steering or stabilization devices of vehicle including the articulation bearing (Patent document 2).
Patent Document 1: JP 2009-132377 A
Patent document 2: FR 2 851 539 A1

### DISCLOSURE OF THE INVENTION

### [Problems to be Solved by the Invention]

However, since the invention described in Patent Document 1 uses a long arm etc., space cannot be effectively used, and depending on the structure of a suspension device, the camber angle adjusting device cannot be easily mounted.

The present invention was developed to solve the above problems, and it is an object of the present invention to provide a camber angle adjusting device that has a compact, simple structure and that can be easily mounted.

### [Means for Solving the Problems]

In order to achieve the above object, according to the present invention, a camber angle adjusting device according to claim 1 is provided. Such a camber angle adjusting device includes a vehicle body, a vehicle wheel, and a suspension device suspending the vehicle wheel with respect to the vehicle body, and that changes a camber angle of the vehicle wheel. The device further includes a drive member having a motor that is mounted in the vehicle body and generates a driving force, and an output shaft that outputs the driving force generated by the motor; a speed reducing portion that is coupled to the output shaft and reduces a speed of rotation of the drive member; a crank portion having a crankshaft that is coupled to the speed reducing portion and rotates about a centerline coaxial with the output shaft, and a crankpin that is coupled parallel to the crankshaft and rotates about the crankshaft; a coupling member having one end thereof rotatably coupled to the crankpin; and a pivot member that supports the vehicle wheel rotatably with respect to an axis in a lateral direction of the vehicle body, and is rotatably supported, on one side thereof in a vertical direction, by the suspension device, and is coupled, on the other side in the vertical direction, to the other end of the coupling member.

A camber angle adjusting device that changes a camber angle of a vehicle wheel suspended with respect to a vehicle body via an upper arm and a lower arm includes: a drive member that is mounted in the vehicle body and generates a driving force; a speed reducing portion that reduces a speed of rotation of the drive member; and a crank portion that has a crankshaft coupled to the speed reducing portion, and a crankpin coupled to the upper arm.

The camber angle adjusting device is configured such that the drive member has a motor that generates the driving force, and an output shaft that outputs the driving force generated by the motor, and the output shaft is disposed coaxially with the crankshaft.

The camber angle adjusting device is characterized in that the speed reducing portion has an outer gear supported by the vehicle body, a sun gear coaxially coupled to the output shaft, a planetary gear meshing with the outer gear and the sun gear and movable around the sun gear, and an output member that is coaxially coupled to the crankshaft of the crank portion and that rotates in response to movement of the planetary gear.

The camber angle adjusting device is characterized in that the drive member has an outer diameter larger than that of the speed reducing portion, and the drive member has a length, in an output shaft direction, shorter than the speed reducing portion.

### [Effects of the Invention]

In the invention according to claim 1, the camber angle adjusting device that includes the vehicle body, the vehicle wheel, and the suspension device suspending the vehicle wheel with respect to the vehicle body, and that changes the camber angle of the vehicle wheel includes: the drive member having the motor that is mounted in the vehicle body and generates the driving force, and the output shaft that outputs the driving force generated by the motor; the speed reducing portion that is coupled to the output shaft and reduces the speed of rotation of the drive member; the crank portion having the crankshaft that is coupled to the speed reducing portion and rotates about the centerline coaxial with the output shaft, and the crankpin that is coupled parallel to the crankshaft and rotates about the crankshaft; the coupling member having one end thereof rotatably coupled to the crankpin; and the pivot member that supports the vehicle wheel rotatably with respect to the axis in the lateral direction of the vehicle body, and is rotatably supported, on one side thereof in the vertical direction, by the suspension device, and is coupled, on the other side in the vertical direction, to the other end of the coupling member. Thus, the camber angle adjusting device can be provided which has a compact, simple structure and which can be easily mounted.

In the invention according to claim 2, the camber angle adjusting device that changes the camber angle of the vehicle wheel suspended with respect to the vehicle body via the upper arm and the lower arm includes: the drive member that is mounted in the vehicle body and generates the driving force; the speed reducing portion that reduces the speed of rotation of the drive member; and the crank portion that has the crankshaft coupled to the speed reducing portion, and the crankpin coupled to the upper arm. This allows the camber angle adjusting device to have a simple structure with a small number of parts and to be easily mounted on a double wishbone suspension. Moreover, reduction in unsprung weight can be achieved, and ride quality and vehicle dynamics are improved.

In the invention according to claim 3, the drive member has the motor that generates the driving force, and the output shaft that outputs the driving force generated by the motor, and the output shaft is disposed coaxially with the crankshaft. This further simplifies the structure.

In the invention according to claim 4, the speed reducing portion has the outer gear supported by the vehicle body, the sun gear coaxially coupled to the output shaft, the planetary gear meshing with the outer gear and the sun gear and movable around the sun gear, and the output member that is coaxially coupled to the crankshaft of the crank portion and that rotates in response to movement of the planetary gear. This can reduce installation space.

In the invention according to claim 5, the drive member has an outer diameter larger than that of the speed reducing portion, and the drive member has a length, in the output shaft direction, shorter than the speed reducing portion. This can further reduce the installation space.

### BRIEF DESCRIPTION OF THE DRAWINGS

[FIG. 1] FIG. 1 is a front perspective view of a camber angle adjusting device of an embodiment.
[FIG. 2] FIG. 2 is a diagram of the camber angle adjusting device of the embodiment as viewed from the front.
[FIG. 3] FIG. 3 is a diagram of the camber angle adjusting device of the embodiment as viewed from above.
[FIG. 4] FIG. 4 is a cross-sectional view taken along line A-A in FIG. 2 according to a first embodiment.
[FIG. 5] FIG. 5 is a diagram of a camber angle adjusting device of the first embodiment in an actuated state as viewed from the front.
[FIG. 6] FIG. 6 is a cross-sectional view taken along line B-B in FIG. 5 according to the first embodiment.
[FIG. 7] FIG. 7 is a cross-sectional view taken along line A-A in FIG. 2 according to a second embodiment.
[FIG. 8] FIG. 8 is a diagram of a camber angle adjusting device of the second embodiment in an actuated state as viewed from the front.
[FIG. 9] FIG. 9 is a cross-sectional view taken along line B-B in FIG. 5 according to the second embodiment.
[FIG. 10] FIG. 10 is an enlarged view of an electromagnetic brake of the second embodiment.
[FIG. 11] FIG. 11 is an enlarged view of the electromagnetic brake of the second embodiment during actuation.
[FIG. 12] FIG. 12 is a diagram showing another embodiment of the electromagnetic brake of a camber angle adjusting unit.
[FIG. 13] FIG. 13 is an enlarged view of the electromagnetic brake of the another embodiment.
[FIG. 14] FIG. 14 is an enlarged view of the electromagnetic brake of the another embodiment during actuation.

### BEST MODES FOR CARRYING OUT THE INVENTION

Modes for carrying out the present invention will be described below based on the accompanying drawings.

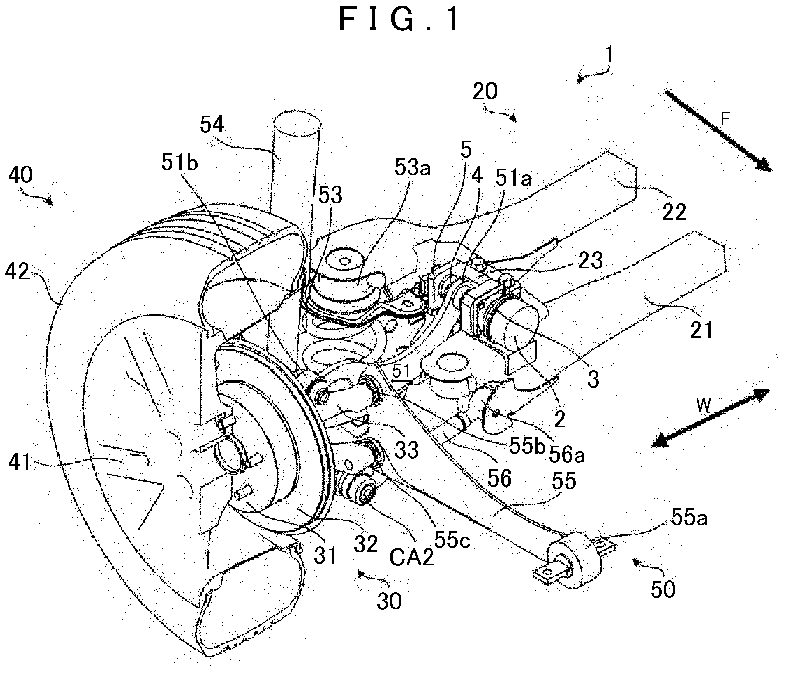

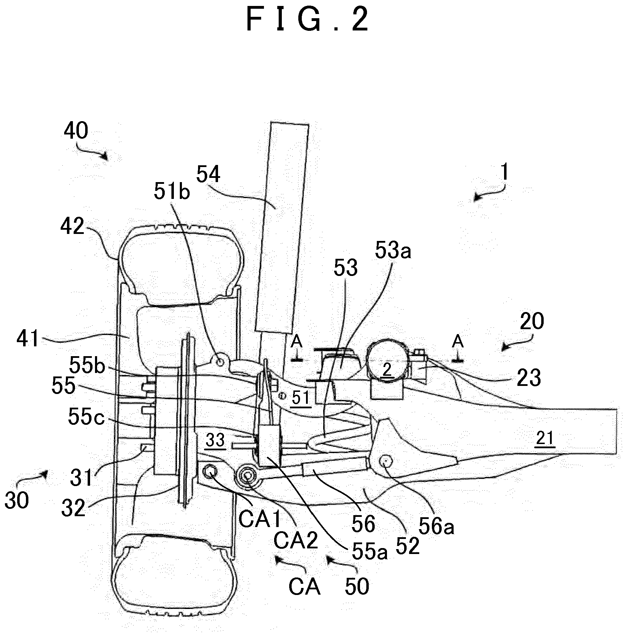

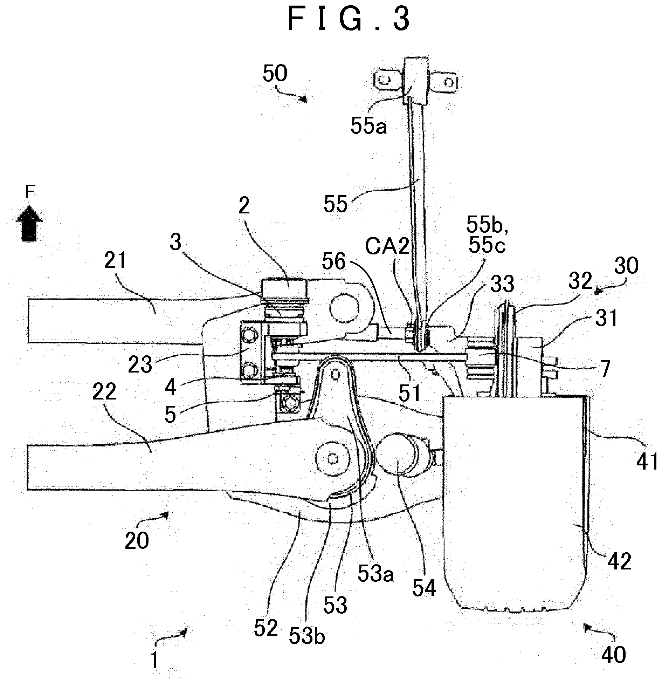

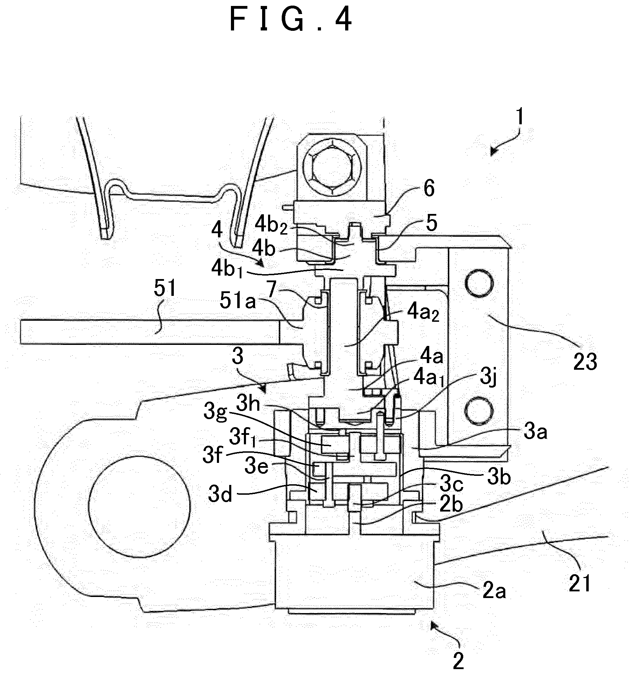

FIG. 1 is a front perspective view of a camber angle adjusting device 1 of an embodiment. FIG. 2 is a diagram of the camber angle adjusting device of the embodiment as viewed from the front. FIG. 3 is a diagram of the camber angle adjusting device of the embodiment as viewed from above. FIG. 4 is a cross-sectional view taken along line A-A in FIG. 2. A front half of a vehicle wheel is not shown in the figures. An arrow "F" represents a forward direction of a vehicle, and an arrow "W" represents a lateral direction of a vehicle body of the vehicle, which is perpendicular to a longitudinal direction of the vehicle.

In FIG. 1, "1" represents a camber angle adjusting device, "2" represents a drive member, "3" represents a speed reducing portion, "4" represents a crank portion, "5" represents a bearing member, "6" represents a detection member, "20" represents a vehicle body, "21" represents a first suspension member, "22" represents a second suspension member, "23" represents a unit support member, "30" represents a hub, "31" represents a hub member, "32" represents a disc brake, "33" represents a hub support member as a pivot member, "40" represents a vehicle wheel, "41" represents a wheel, and "42" represents a tire. "50" represents a suspension device, "51" represents an upper arm as a coupling member, "52" represent a first lower arm, "53" represents a spring, "54" represents a shock absorber, "55" represents a trailing arm, and "56" represents a second lower arm.

The camber angle adjusting device 1 according to the present embodiment includes a vehicle body 20, a vehicle wheel 40, and a suspension device 50 suspending the vehicle wheel 40 with respect to the vehicle body 20, and changes the camber angle of the vehicle wheel 40. The camber angle adjusting device 1 includes: a drive member 2 having a motor 2a that is mounted in the vehicle body 20 and generates a driving force, and an output shaft 2b that outputs the driving force generated by the motor 2a; a speed reducing portion 3 that is coupled to the output shaft 2b and reduces the speed of rotation of the drive member 2; a crank portion 4 having a crankshaft 4a that is coupled to the speed reducing portion 3 and rotates about a centerline coaxial with the output shaft 2b, and a crankpin 4b that is coupled parallel to the crankshaft 4a and rotates about the crankshaft 4a; an upper arm 51 having its one end rotatably coupled to the crankpin 4b; and a hub support member 33 that supports the vehicle wheel 40 rotatably with respect to an axis in the lateral direction W of the vehicle body 20, and that is rotatably supported, on its one side in a vertical direction, by a second lower arm 56 and is coupled, on the other side in the vertical direction, to the other end of the upper arm 51.

In the present embodiment, the camber angle adjusting device 1 may be considered as a unit. In this case, "1" represents a camber angle adjusting unit as the camber angle adjusting device.

A vehicle to which the camber angle adjusting unit 1 of the present embodiment is attached will be described.

The vehicle of the present embodiment is a vehicle using a double wishbone suspension. The vehicle has the vehicle body 20, the vehicle wheel 40, a hub 30 that supports the vehicle wheel 40 rotatably with respect to the vehicle body 20, and the suspension device 50 that suspends the vehicle wheel 40 and the hub 30 with respect to the vehicle body 20.

The vehicle body 20 has a first suspension member 21, a second suspension member 22, and a unit support member 23 provided so as to extend between the first suspension member 21 and the second suspension member 22.

The hub 30 includes a rotating portion 31 that is coupled to a drive shaft (not shown) and is rotated by a driving force of an engine, a motor, etc., a disc brake portion 32 that rotates together with the rotating portion 31, and a hub support member 33 that is coupled to the vehicle body 20 via the suspension device 50 and rotatably supports the rotating portion 31 and the disc brake 32. The hub support member 33 is rotatably supported, on its one side in the vertical direction, by the other end of the second lower arm 56, and is coupled, on the other side in the vertical direction, to the other end of the upper arm 51.

The vehicle wheel 40 includes a wheel 41 that is fastened to the rotating portion 31 of the hub 30 by a bolt etc. and rotates together with the rotating portion 31, and a tire 42 attached to the outer periphery of the wheel 41.

The suspension device 50 is formed by the upper arm 51, a first lower arm 52, a spring 53, a shock absorber 54, a trailing arm 55, and the second lower arm 56.

A first coupling portion 51a at one end of the upper arm 51 is rotatably coupled to a crankpin 4a₂ of the crank member 4 via a bearing 7 such as a slide bearing, and a second coupling portion 51b at the other end of the upper arm 51 is coupled to the hub support member 33 of the hub 30 rotatably with respect to an axis in the longitudinal direction or substantially in the longitudinal direction of the vehicle via a bearing such as a rubber bush or a pillow ball.

A first coupling portion (not shown) at one end of the first lower arm 52 is coupled to the second suspension member 22 of the vehicle body 20 rotatably with respect to an axis in the longitudinal direction or substantially in the longitudinal direction of the vehicle via a bearing such as a rubber bush or a pillow ball. By a first camber member CA1 that is provided at the other end of the first lower arm 52 and serves as a camber member CA forming a camber axis in the longitudinal direction or substantially in the longitudinal direction of the vehicle, the first lower arm 52 is coupled to the hub support member 33 of the hub 30 rotatably with respect to an axis in the longitudinal direction or substantially in the longitudinal direction of the vehicle via a bearing such as a rubber bush or a pillow ball.

An upper part of the spring 53 is coupled to the vehicle body 20 via a first spring receiver 53a, and a lower part of the spring 53 is coupled to the first lower arm 52 via a second spring receiver 53b.

Although not shown in the figure, an upper part of the shock absorber 54 is coupled to the vehicle body 20. A lower part of the shock absorber 54 is coupled to the first lower arm 52.

A first coupling portion at a front end of the trailing arm 55 is coupled to the vehicle body 20 rotatably with respect to an axis in the lateral direction or substantially in the lateral direction of the vehicle via a bearing such as a rubber bush or a pillow ball. A second coupling portion 55b in an upper part of a rear end of the trailing arm 55 is coupled to the hub support member 33 of the hub 30 rotatably with respect to an axis in the lateral direction or substantially in the lateral direction of the vehicle via a bearing such as a rubber bush or a pillow ball. A third coupling portion 55c in a lower part of the rear end of the trailing arm 55 is fastened to the hub support member 33 of the hub 30 by a bolt etc.

A first coupling portion 56a at one end of the second lower arm 56 is coupled to the first suspension member 21 of the vehicle body 20 rotatably with respect to an axis in the longitudinal direction or substantially in the longitudinal direction of the vehicle via a bearing such as a rubber bush or a pillow ball. By a second camber member CA2 that is provided at the other end of the second lower arm 56 and serves as the camber member CA forming the camber axis in the longitudinal direction or substantially in the longitudinal direction of the vehicle, the second lower arm 56 is coupled to the hub support member 33 of the hub 30 rotatably with respect to an axis in the longitudinal direction or substantially in the longitudinal direction of the vehicle via the bearing 7 such as a rubber bush or a pillow ball. In the present embodiment, the second lower arm 56 has a function as a toe control link that adjusts a toe angle upon alignment.

The camber angle adjusting unit 1 of the present embodiment will be described below.

The camber angle adjusting unit 1 according to the present embodiment changes the camber angle of the vehicle wheel 40 suspended with respect to the vehicle body 20 via the upper arm 51 and the lower arm 52 of the double wishbone suspension device 50. The camber angle adjusting unit 1 includes: the drive member 2 that generates a driving force of the camber angle adjusting unit 1; the speed reducing portion 3 that reduces the speed of rotation of the drive member 2; and the crank portion 4 having a first crankshaft portion 4a₁ serving as a crankshaft coupled to the speed reducing portion 3, and a crankpin portion 4a₂ serving as a crankpin coupled to the upper arm 51.

The drive member 2 is formed by the motor 2a such as a DC motor, the output shaft 2b that outputs a driving force of the motor, etc. The motor 2a is mounted on the unit support member 23 provided so as to extend between the first suspension member 21 and the second suspension member 22 of the vehicle body 20. That is, the motor 2a is mounted in a sprung portion with respect to the suspension device 50. The unit support member 23 need not necessarily be provided in advance in the vehicle body 20, but may be mounted as a part of the camber angle adjusting unit 1.

Mounting the motor 2a in the sprung portion in this manner can achieve reduction in unsprung weight, whereby ride quality and vehicle dynamics are improved.

As shown in FIG. 4, the motor 2a is preferably a flat motor whose axial length is shorter than its radial length. The outer diameter of the motor 2a is preferably larger than that of each gear of the speed reducing portion 3.

Thus using a flat motor as the motor 2a can reduce the installation space.

The speed reducing portion 3 is a portion that is attached to the output shaft 2b of the drive member 2 and that reduces the speed of the driving force of the motor 2a to transmit the resultant driving force to the crank member 4. As shown in FIG. 4, the speed reducing portion 3 of the present embodiment includes: a case 3a; a ring-shaped outer gear 3b fixed to the case 3a; a sun gear 3c coupled to the output shaft 2b of the motor 2a; a plurality of first planetary gears 3d meshing with the sun gear 3c and the outer gear 3b and rotating around the sun gear 3c by a driving force of the sun gear 3c; a first planetary shaft 3e supporting the first planetary gears 3d; a planetary carrier 3f fixed to the first planetary shaft 3e and rotating about a rotating shaft 3f₁ by the rotation of the first planetary gears 3d around the sun gear 3c; a plurality of second planetary gears 3g meshing with the rotating shaft 3f₁ of the planetary carrier 3f and the outer gear 3b and rotating around the rotating shaft 3f₁ of the planetary carrier 3f; a second planetary shaft 3h supporting the second planetary gears 3g; and an output member 3j fixed to the second planetary shaft 3h and rotating by the rotation of the second planetary gears 3g around the rotating shaft 3f₁ of the planetary carrier 3f. Three first planetary gears 3d and three second planetary gears 3g are used in the present embodiment. Although the present embodiment is a two-stage configuration having the first planetary gears 3d and the second planetary gears 3g, the present invention may be a single-stage configuration in which the first planetary shaft 3e of the first planetary gears 3d is fixed to the output member 3j.

Forming the speed reducing portion 3 by the planetary gears in this manner can reduce the installation space.

The crank portion 4 is formed by: a first crank member 4a having the first crankshaft portion 4a₁ rotating together with the output member 3j of the speed reducing portion 3, and the crankpin portion 4a₂ coupled to the upper arm 51; and a second crank member 4b having a crankpin joint portion 4b₁ attached to the crankpin portion 4a₂ of the first crank member 4a so as to be rotatable together with the crankpin portion 4a₂ of the first crank member 4a, and a second crankshaft portion 4b₂ rotatably supported by the unit support portion 23 by a bearing 5 such as a roll bearing or a slide bearing.

The crank portion 4 is preferably provided with an angle sensor 6 serving as a detection member. In the present embodiment, the angle sensor 6 is provided so as to adjoin the second crankshaft portion 4b₂ of the second crank member 4b, and measures a rotation angle. The sensor may be configured as, e.g., an existing optical sensor that reads a marker etc. A display device (not shown) which shows that the vehicle wheel has a camber angle, the motor 2a, or an operation system such as an accelerator or a brake of the vehicle can be controlled according to the angle measured by the angle sensor 6.

Since the angle sensor 6 is provided in the sprung portion so as to adjoin the crank portion 4, the influence of vibrations can be reduced and detection can be performed with higher accuracy, as compared to the case where the angle sensor 6 is provided in an unsprung portion. The detection member may be attached to the first crank member 4a. The detection member may be a rotational speed sensor that is provided in the motor 2a or the speed reducing portion 3 to measure a rotational speed.

Such a camber angle adjusting unit 1 of the present embodiment is configured as a unit, and can be easily mounted in the vehicle body 20 by inserting the crankpin portion 4a₂ of the first crank member 4a through the first coupling portion 51a of the upper arm 51, and then attaching the second crank member 4b to the first crank member 4a. The camber angle adjusting unit 1 may be attached in advance to the upper arm 51 and mounted in the vehicle body 20.

Actuation of the camber angle adjusting unit 1 of the first embodiment will be described below.

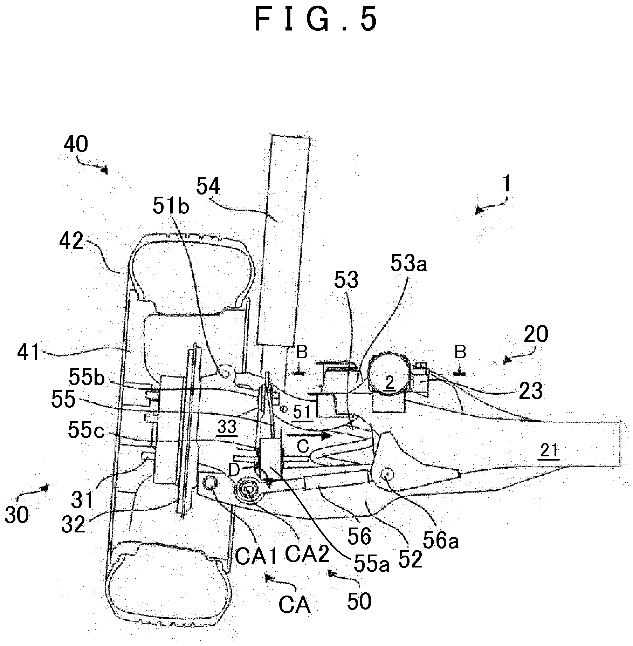

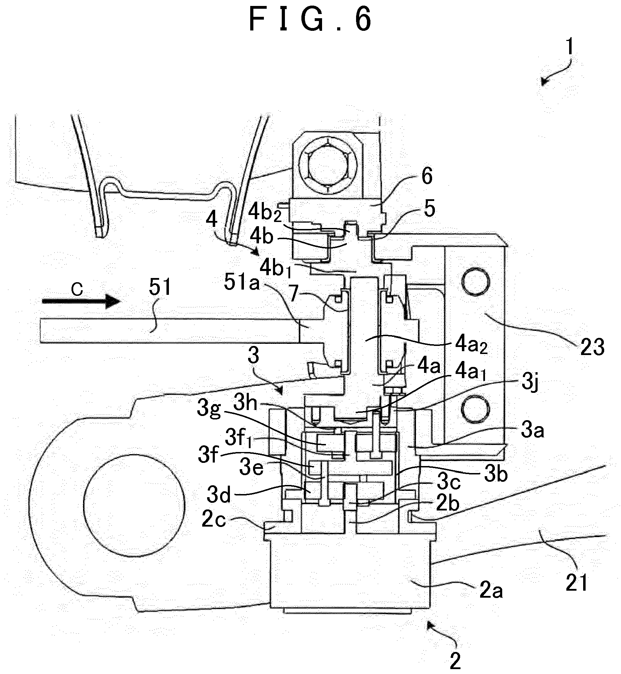

FIG. 5 is a diagram of the camber angle adjusting device of the embodiment in an actuated state as viewed from the front. FIG. 6 is a cross-sectional view taken along line B-B in FIG. 5.

First, the motor 2a of the drive member 2 starts driving in response to a command to adjust the camber angle from a control device (not shown) etc. The driving force of the motor 2a is reduced in speed by the speed reducing portion 3.

In the speed reducing portion 3, the sun gear 3c coupled to the output shaft 2b of the motor 2a first rotates. As the sun gear 3c rotates, the plurality of first planetary gears 3d disposed around the sun gear 3c move, while rotating, between the sun gear 3c and the outer gear 3b. As the first planetary gears 3d move, the first planetary shaft 3e supporting the first planetary gears 3d moves, and the planetary carrier 3f fixed to the first planetary shaft 3e rotates about the rotating shaft 3f₁. As the rotating shaft 3f₁ of the planetary carrier 3f rotates, the plurality of second planetary gears 3g meshing with the rotating shaft 3f₁ and the outer gear 3b move, while rotating, around the rotating shaft 3f₁. As the second planetary gears 3g move, the second planetary shaft 3h supporting the second planetary gears 3g moves, and the output member 3j fixed to the second planetary shaft 3h rotates.

The rotation of the output member 3j of the speed reducing portion 3 is transmitted to the crank portion 4, and the first crank member 4a and the second crank member 4b rotate about the crankshaft of the first crankshaft portion 4a₁ and the second crankshaft portion 4b₂.

As the first crank member 4a and the second crank member 4b rotate, the crankpin portion 4a₂ disposed eccentrically with respect to the crank shaft is rotated about the crankshaft by approximately 180° in the lateral direction from the state shown in FIG. 4 to the state shown in FIG. 6.

As the crank portion 4 rotates, the first coupling portion 51a of the upper arm 51, which is coupled to the crankpin portion 4a₂, rotates together with the crankpin portion 4a₂. As the first coupling portion 51a rotates, the upper arm 51 is pulled by the first coupling portion 51a to move in a direction shown by an arrow C. The upper arm 51 pulls the second coupling portion 51b, and pulls the hub support member 33 coupled to the second coupling portion 51b.

The hub support member 33 pulled by the upper arm 51 rotates in a direction shown by an arrow D about the camber axis formed by the camber member CA.

As the hub support member 33 rotates in the direction of arrow D, the hub member 31 and the vehicle wheel 40 also rotate in the direction of arrow D, whereby the vehicle wheel 40 has a negative camber.

Regardless of whether the vehicle wheel 40 does not have a negative camber or has a negative camber, a self-lock state is created in which the crankshaft formed by the first crankshaft portion 4a₁ and the second crankshaft portion 4b₂ of the crank portion 4, the crankpin portion 4a₂, and the second coupling member 51b are aligned in line or substantially in line. Thus, the camber angle adjusting device is robust against disturbance etc. from the vehicle wheel 40.

As described above, according to the first embodiment, the camber angle adjusting device 1 includes the vehicle body 20, the vehicle wheel 40, and the suspension device 50 suspending the vehicle wheel 40 with respect to the vehicle body 20, and changes the camber angle of the vehicle wheel 40. The camber angle adjusting device 1 includes: the drive member 2 having the motor 2a that is mounted in the vehicle body 20 and generates a driving force, and the output shaft 2b that outputs the driving force generated by the motor 2a; the speed reducing portion 3 that is coupled to the output shaft 2b and reduces the speed of rotation of the drive member 2; the crank portion 4 having the crankshaft 4a that is coupled to the speed reducing portion 3 and rotates about the centerline coaxial with the output shaft 2b, and the crankpin 4b that is coupled parallel to the crankshaft 4a and rotates about the crankshaft 4a; the upper arm 51 having its one end rotatably coupled to the crankpin 4b; and the hub support member 33 that supports the vehicle wheel 40 rotatably with respect to the axis in the lateral direction W of the vehicle body 20, and that is rotatably supported, on its one side in the vertical direction, by the second lower arm 56 and is coupled, on the other side in the vertical direction, to the other end of the upper arm 51. Thus, the camber angle adjusting device 1 can be provided which has a compact, simple structure and which can be easily mounted.

According to the first embodiment, the camber angle adjusting device 1 changes the camber angle of the vehicle wheel 40 suspended with respect to the vehicle body 20 via the upper arm 51 and the first lower arm 52 or the second lower arm 56 of the double wishbone suspension device 50. The camber angle adjusting device 1 includes: the drive member 2 that is mounted in the vehicle body 20 and generates a driving force; the speed reducing portion 3 that reduces the speed of rotation of the drive member 2; and the crank portion 4 that has the first crankshaft portion 4a₁ coupled to the speed reducing portion 3, and the crankpin portion 4a₂ coupled to the upper arm 51. This allows the camber angle adjusting device 1 to have a simple structure with a small number of parts and to be easily mounted on the double wishbone suspension. Moreover, reduction in unsprung weight can be achieved, and ride quality and vehicle dynamics are improved.

Moreover, the drive member 2 has the motor 2a that generates a driving force and the output shaft 2b that outputs the driving force generated by the motor 2a, and the output shaft 2b is disposed coaxially with the first crankshaft portion 4a₁. This further simplifies the structure.

The speed reducing portion 3 has the outer gear 3b supported by the vehicle body 20, the sun gear 3c coaxially coupled to the output shaft 2b, the planetary gears 3d meshing with the outer gear 3b and the sun gear 3c and movable around the sun gear 3c, and the output member 3j coaxially coupled to the first crankshaft portion 4a₁ of the crank portion 4 and rotating by movement of the planetary gears 3d. This can reduce the installation space.

The drive member 2 has an outer diameter larger than the speed reducing portion 3, and the drive member 2 has a shorter length in the direction of the output shaft than the speed reducing portion 3. This can further reduce the installation space.

A camber angle adjusting unit 1 according to a second embodiment will be described below.

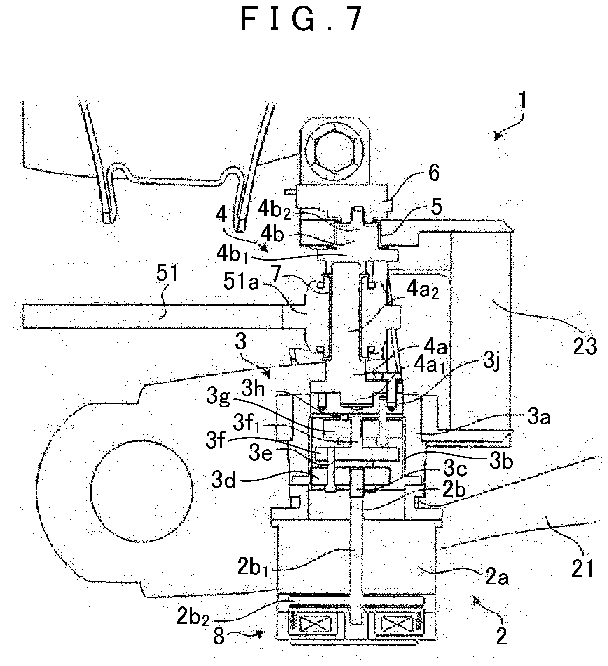

FIG. 7 is a cross-sectional view taken along line A-A in FIG. 2 according to the second embodiment.

In the camber angle adjusting unit 1 of the second embodiment, an output shaft 2b of a drive member 2 extends through a motor 2a, and is connected to an electromagnetic brake 8 serving as a brake member provided on the opposite side from a speed reducer 3. A circular plate-shaped portion 2b₂ protruding in a radial direction from a shaft portion 2b₁ of the output shaft 2b is provided between the electromagnetic brake 8 and the motor 2a. The configuration of the second embodiment is otherwise similar to that of the first embodiment. Actuation of the electromagnetic brake 8 will be described later.

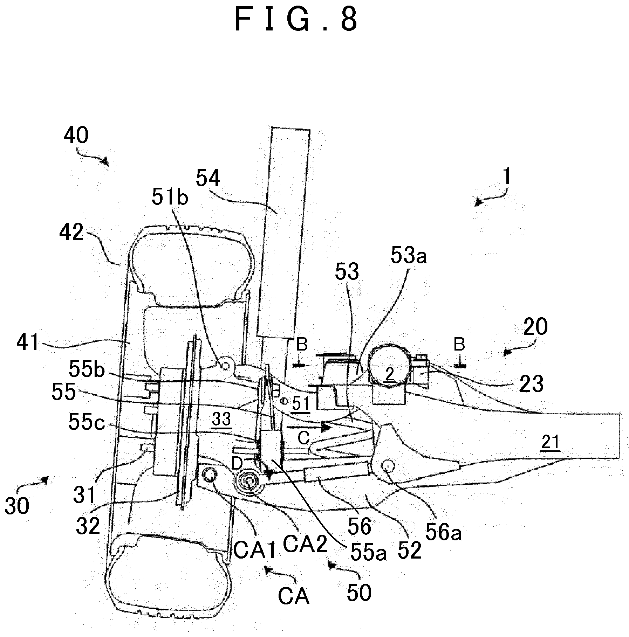

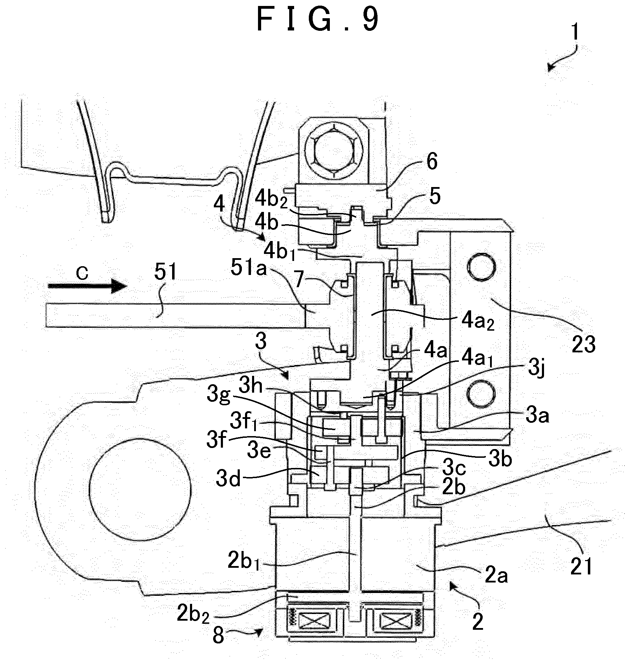

FIG. 8 is a diagram of the camber angle adjusting device of the second embodiment in an actuated state as viewed from the front. FIG. 9 is a cross-sectional view taken along line B-B in FIG. 8.

Actuation of the camber angle adjusting unit 1 of the second embodiment is similar to that of the first embodiment.

Actuation of the electromagnetic brake 8 in the camber angle adjusting unit 1 of the second embodiment will be described below.

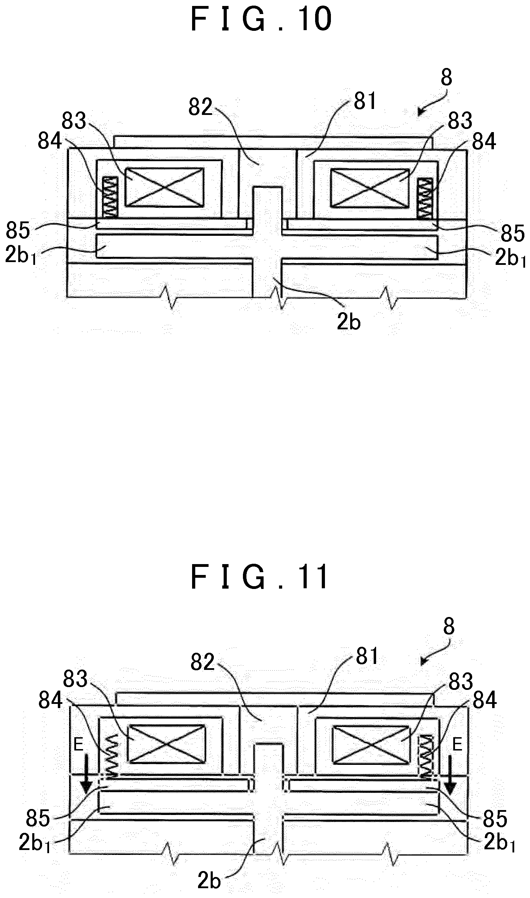

FIG. 10 is an enlarged view of the electromagnetic brake. FIG. 11 is an enlarged view of the electromagnetic brake during actuation.

The electromagnetic brake 8 is a non-excitation electromagnetic brake that has: a case 81 fixed to the motor 2a; a bearing 82 supporting the output shaft 2b rotatably with respect to the case 81; a coil 83 generating a magnetic force in response to application of a voltage; a spring 84 having its one end supported by the case 81; and a movable plate 85 being in contact with and pressed against the other end of the spring 84 and attracted by the magnetic force generated by the coil. The electromagnetic brake 8 is directly coupled to the motor 2a.

The case 81 is fixed to the motor 2a, and rotatably supports the output shaft 2b via the bearing 82.

Normally, as shown in FIG. 10, when a power supply of the camber angle adjusting unit 1 is ON, a voltage is applied to the coil 83, and the coil 83 generates a magnetic force and attracts the movable plate 85. The movable plate 85 is attracted by the magnetic force larger than the pressing force of the spring 84, and is located closer to the coil 83. A gap is produced between the movable plate 85 and the plate-shaped portion 2b₂ of the drive member 2 so that the shaft portion 2b₁ and the plate-shaped portion 2b₂ of the output shaft 2b can rotate.

If application of the voltage to the coil 83 is stopped, the coil 83 stops generating the magnetic force, and as shown in FIG. 11, the movable plate 85 moves in a direction shown by an arrow E so as to be pressed against the plate-shaped portion 2b₂ by the pressing force of the spring 84. The plate-shaped portion 2b₂ stops rotating due to a braking force applied from the movable plate 85. The electromagnetic brake 8 maintains load in the stopped state. Thus, setting the electromagnetic brake 8 so that the electromagnetic brake 8 is stopped with the crank portion 4 being in the self-lock state allows the position of the crank portion 4 to be fixed even if the suspension device 50 is actuated by disturbance etc. from the vehicle wheel 40. Thus, the camber angle adjusting device 1 can be made robust against disturbance etc. Since the electromagnetic brake 8 brakes the drive member 2, the electromagnetic brake 8 is used at a position where the torque is small before reduction in speed. Thus, a small electromagnetic brake can be used as the electromagnetic brake 8, and the cost of the electromagnetic brake 8 can be reduced.

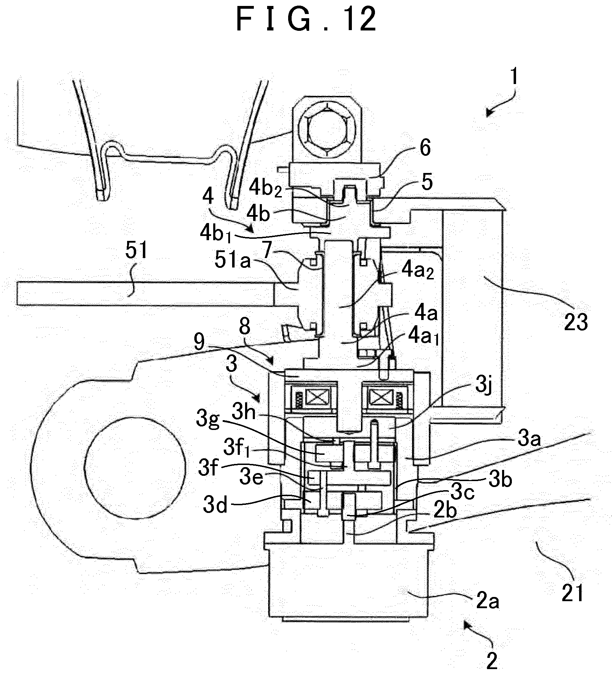

FIG. 12 is a diagram showing another embodiment of the electromagnetic brake 8 of the camber angle adjusting unit 1.

In the present embodiment, the electromagnetic brake 8 is provided between the speed reducing portion 3 and the crank portion 4. Specifically, a connecting member 9 is provided which connects the output member 3j of the speed reducing portion 3 and the first crankshaft portion 4a₁ of the first crank member 4a of the crank portion 4 so that the output member 3j rotates together with the first crankshaft portion 4a₁.

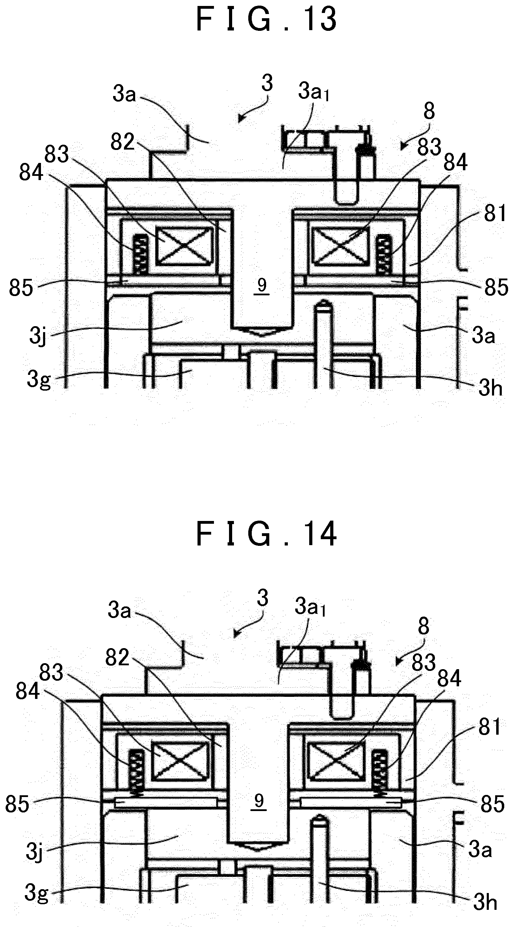

FIG. 13 is an enlarged view of the electromagnetic brake of the other embodiment. FIG. 14 is an enlarged view of the electromagnetic brake of the other embodiment during actuation.

Normally, as shown in FIG. 13, when the power supply of the camber angle adjusting unit 1 is ON, a voltage is applied to the coil 83, and the coil 83 generates a magnetic force and attracts the movable plate 85. The movable plate 85 is attracted by the magnetic force larger than the pressing force of the spring 84, and is located closer to the coil 83. A gap is produced between the movable plate 85 and the output member 3j so that the output member 3j can rotate.

If application of the voltage to the coil 83 is stopped, the coil 83 stops generating the magnetic force, and as shown in FIG. 14, the movable plate 85 moves in a direction shown by an arrow G so as to be pressed against the output member 3j by the pressing force of the spring 84. The output member 3j stops rotating due to a braking force applied from the movable plate 85. The electromagnetic brake maintains load in this stopped state. Thus, setting the electromagnetic brake so that the electromagnetic brake is stopped with the crank portion 4 being in the self-lock state allows the position of the crank portion 4 to be fixed even if the suspension device 50 is actuated by disturbance etc. from the vehicle wheel 40. Thus, the camber angle adjusting unit 1 can be made robust against disturbance etc. Since the output member 3j of the speed reducing portion 3 is braked, each gear of the speed reducing portion 3 is held stationary, and the camber angle adjusting unit 1 can be made more robust against disturbance etc.

Although the first lower arm 52 and the second lower arm 56 are provided as a lower arm in the present embodiment, only the first lower arm 52 may be provided.

As described above, according to the second embodiment, the camber angle adjusting device 1 includes the vehicle body 20, the vehicle wheel 40, and the suspension device 50 suspending the vehicle wheel 40 with respect to the vehicle body 20, and changes the camber angle of the vehicle wheel 40 by pivoting about the camber axis. The camber angle adjusting device 1 includes: the drive member 2 having the motor 2a that is mounted in the vehicle body 20 and generates a driving force, and the output shaft 2b that outputs the driving force generated by the motor 2a; the speed reducing portion 3 that is coupled to the output shaft 2b and reduces the speed of rotation of the drive member 2; the crank portion 4 having the crankshaft 4a that is coupled to the speed reducing portion 3 and rotates about the centerline coaxial with the output shaft 2b, and the crankpin 4b that is coupled parallel to the crankshaft 4a and rotates about the crankshaft 4a; the upper arm 51 having its one end coupled to the crankpin 4b; the camber member CA extending along the camber axis; the hub support member 33 that rotatably supports the vehicle wheel 40 and that is pivotally supported, on its one side in the vertical direction, by the camber member CA and is coupled, on the other side in the vertical direction, to the other end of the upper arm 51; and the electromagnetic brake 8 that brakes rotation of the crank portion 4. Thus, the camber angle adjusting device 1 can be provided which has a compact, simple structure and which can be easily mounted. Moreover, the electromagnetic brake 8 maintains load in the stopped state. Thus, setting the electromagnetic brake 8 so that the electromagnetic brake 8 is stopped with the crank portion 4 being in the self-lock state allows the position of the crank portion 4 to be fixed even if the suspension device 50 is actuated by disturbance etc. from the vehicle wheel 40. Thus, the camber angle adjusting device 1 can be made robust against disturbance etc.

Moreover, since the electromagnetic brake 8 brakes the output shaft 2b, the electromagnetic brake 8 is used at a position where the torque is small before reduction in speed. Thus, a small electromagnetic brake can be used as the electromagnetic brake 8, and the cost of the electromagnetic brake 8 can be reduced.

Since the electromagnetic brake 8 brakes the portion between the speed reducing portion 3 and the crankshaft 4a, each gear of the speed reducing portion 3 is held stationary, and the camber angle adjusting device 1 can be made more robust against disturbance etc.

Moreover, according to the second embodiment, the camber angle adjusting device 1 changes the camber angle of the vehicle wheel 40 suspended with respect to the vehicle body 20 via the upper arm 51 and the first lower arm 52 or the second lower arm 56 of the double wishbone suspension device 50. The camber angle adjusting device 1 includes: the drive member 2 that is mounted in the vehicle body 20 and generates a driving force; the speed reducing portion 3 that reduces the speed of rotation of the drive member 2; the crank portion 4 having the first crankshaft portion 4a₁ coupled to the speed reducing portion 3, and the crankpin portion 4a₂ coupled to the upper arm 51; and the electromagnetic brake 8 that brakes rotation of the crank portion. This allows the camber angle adjusting device 1 to have a simple structure with a small number of parts and to be easily mounted on the double wishbone suspension. Moreover, reduction in unsprung weight can be achieved, and ride quality and vehicle dynamics are improved. Furthermore, the electromagnetic brake 8 maintains load in the stopped state. Thus, setting the electromagnetic brake 8 so that the electromagnetic brake 8 is stopped with the crank portion 4 being in the self-lock state allows the position of the crank portion 4 to be fixed even if the suspension device 50 is actuated by disturbance etc. from the vehicle wheel 40. Thus, the camber angle adjusting device 1 can be made robust against disturbance etc.

Moreover, the drive member 2 has the motor 2a that generates a driving force and the output shaft 2b that outputs the driving force generated by the motor 2a, the output shaft 2b is provided coaxially with the first crankshaft portion 4a₁, and the electromagnetic brake 8 brakes the output shaft 2b. This further simplifies the structure. Furthermore, since the electromagnetic brake 8 is used at a position where the torque is small before reduction in speed. Thus, a small electromagnetic brake can be used as the electromagnetic brake 8, and the cost of the electromagnetic brake 8 can be reduced.

The speed reducing portion 3 has the outer gear 3b supported by the vehicle body 20, the sun gear 3c coaxially coupled to the output shaft 2b, the planetary gears 3d meshing with the outer gear 3b and the sun gear 3c and movable around the sun gear 3c, and the output member 3j coaxially coupled to the first crankshaft portion 4a₁ of the crank portion 4 and rotating by movement of the planetary gears 3d, and the brake member brakes the output member. This can reduce the installation space, and can make the camber angle adjusting device more robust against disturbance etc.

### INDUSTRIAL APPLICABILITY

In the present invention described above, a camber angle adjusting device can be provided which has a compact, simple structure and which can be easily mounted.

## Claims

1. A camber angle adjusting device (1) that includes a vehicle body (20), a vehicle wheel (40), and a suspension device (50) suspending the vehicle wheel (40) with respect to the vehicle body (20), and that changes a camber angle of the vehicle wheel (40), the camber angle adjusting device (1) comprising:
a drive member (2) having a motor (2a) that is mounted in the vehicle body (20) and generates a driving force, and an output shaft (2b) that outputs the driving force generated by the motor (2a);
a speed reducing portion (3) that is coupled to the output shaft (2b) and reduces a speed of rotation of the drive member (2);
a crank portion (4) having a crankshaft (4a) that is coupled to the speed reducing portion (3), and a crankpin (4b) that is coupled parallel to the crankshaft (4a) and rotates about the crankshaft (4a);
a coupling member (51) having one end thereof rotatably coupled to the crankpin (4b); and
a pivot member (33) that supports the vehicle wheel (40) rotatably with respect to an axis in a lateral direction of the vehicle body (20), and is rotatably supported, on one side thereof in a vertical direction, by the suspension device (50), and is coupled, on the other side in the vertical direction, to the other end of the coupling member (51)
**characterized in that**
the crank portion (4) rotates about a centerline coaxial with the output shaft (2b);
the output shaft (2b) outputs the driving force generated by the motor (2a), and
the output shaft (2b) is disposed coaxially with the crankshaft (4a).

2. The camber angle adjusting device (1) according to claim 1, **characterized in that**
the speed reducing portion (3) has
an outer gear (3b) supported by the vehicle body (20),
a sun gear (3c) coaxially coupled to the output shaft (2b),
a planetary gear (3d) meshing with the outer gear (3b) and the sun gear (3c) and movable around the sun gear (3c), and
an output member (3j) that is coaxially coupled to the crankshaft (4a) of the crank portion (4) and that rotates in response to movement of the planetary gear (3d).

3. The camber angle adjusting device (1) according to claim 1 or 2, **characterized in that**
the drive member (2) has an outer diameter larger than that of the speed reducing portion (3), and
the drive member (2) has a length, in an output shaft direction, shorter than the speed reducing portion (3).

## Patentansprüche

1. Sturzwinkeleinstellvorrichtung (1), die einen Fahrzeugkörper (20), ein Fahrzeugrad (40) und eine Aufhängungsvorrichtung (50) aufweist, die das Fahrzeugrad (40) hinsichtlich dem Fahrzeugkörper (20) aufhängt, und die einen Sturzwinkel des Fahrzeugrads (40) ändert, wobei die Sturzwinkeleinstellvorrichtung (1) folgendes aufweist:
ein Antriebsbauteil (2) mit einem Motor (2a), der in dem Fahrzeugkörper (20) montiert ist und eine Antriebskraft erzeugt, und einer Ausgangswelle (2b), die die durch den Motor (2a) erzeugte Antriebskraft ausgibt;
einen Drehzahluntersetzungsabschnitt (3), der an die Ausgangswelle (2b) gekoppelt ist und eine Drehzahl des Antriebsbauteils (2) untersetzt;
einen Kurbelabschnitt (4) mit einer Kurbelwelle (4a), die an den Drehzahluntersetzungsabschnitt (3) gekoppelt ist, und einen Kurbelzapfen (4b), der parallel zu der Kurbelwelle (4a) gekoppelt ist und sich um die Kurbelwelle (4a) herum dreht;
ein Kopplungsbauteil (51) mit einem Ende von diesem, das drehbar an den Kurbelzapfen (4b) gekoppelt ist; und
ein Schwenkbauteil (33), das das Fahrzeugrad (40) hinsichtlich einer Achse in einer lateralen Richtung des Fahrzeugkörpers (20) drehbar stützt, und auf einer Seite von diesem in einer vertikalen Richtung durch die Aufhängungsvorrichtung (50) drehbar gestützt ist und auf der anderen Seite in der vertikalen Richtung an das andere Ende des Kopplungsbauteils (51) gekoppelt ist,
**dadurch gekennzeichnet, dass**
der Kurbelabschnitt (4) sich um eine Mittellinie koaxial zu der Ausgangswelle (2b) dreht;
die Ausgangswelle (2b) die Antriebskraft ausgibt, die durch den Motor (2a) erzeugt ist, und
die Ausgangswelle (2b) koaxial zu der Kurbelwelle (4a) angeordnet ist.

2. Sturzwinkeleinstellvorrichtung (1) nach Anspruch 1, **dadurch gekennzeichnet, dass**
der Drehzahluntersetzungsabschnitt (3) Folgendes hat
ein äußeres Zahnrad (3b), das durch den Fahrzeugkörper (3) gestützt ist,
ein Sonnenrad (3c), das koaxial zu der Ausgangswelle (2b) gekoppelt ist,
ein Planetenrad (3d), das mit dem äußeren Zahnrad (3b) und dem Sonnenrad (3c) kämmt und um das Sonnenrad (3c) herum beweglich ist, und
ein Ausgabebauteil (3j), das koaxial an die Kurbelwelle (4a) des Kurbelabschnitts (4) gekoppelt ist und das sich in Erwiderung auf eine Bewegung des Planetenrads (3d) dreht.

3. Sturzwinkeleinstellvorrichtung (1) nach Anspruch 1 oder 2, **dadurch gekennzeichnet, dass**
das Antriebsbauteil (2) einen Außendurchmesser hat, der größer als jener des Drehzahluntersetzungsabschnitts (3) ist, und
das Antriebsbauteil eine Länge in einer Ausgangswellenrichtung hat, die kürzer als der Drehzahluntersetzungsabschnitt (3) ist.

## Revendications

1. Dispositif d'ajustement d'angle de carrossage (1) qui comprend une carrosserie de véhicule (20), une roue de véhicule (40) et un dispositif de suspension (50) suspendant la roue de véhicule (40) par rapport à la carrosserie de véhicule (20), et qui modifie un angle de carrossage de la roue de véhicule (40), le dispositif d'ajustement d'angle de carrossage (1) comprenant .
un élément d'entraînement (2) ayant un moteur (2a) qui est monté dans la carrosserie de véhicule (20) et génère une force d'entraînement, et un arbre de sortie (2b) qui produit la force d'entraînement générée par le moteur (2a) ;
une partie de réduction de vitesse (3) qui est couplée à l'arbre de sortie (2b) et réduit une vitesse de rotation de l'élément d'entraînement (2) ;
une partie de manivelle (4) ayant un vilebrequin (4a) qui est couplé à la partie de réduction de vitesse (3), et un maneton (4b) qui est couplé parallèlement au vilebrequin (4a) et tourne autour du vilebrequin (4a) ;
un élément de couplage (51) ayant son extrémité couplée, en rotation, au maneton (4b) ; et
un élément de pivot (33) qui supporte la roue de véhicule (40) de manière rotative par rapport à un axe dans une direction latérale du corps de véhicule (20), et est supporté, de manière rotative, sur son côté dans une direction verticale, par le dispositif de suspension (50), et est couplé, de l'autre côté, dans la direction verticale, à l'autre extrémité de l'élément de couplage (51),
**caractérisé en ce que** :
la partie de manivelle (4) tourne autour d'un axe central coaxial avec l'arbre de sortie (2b) ;
l'arbre de sortie (2b) produit la force d'entraînement générée par le moteur (2a), et
l'arbre de sortie (2b) est disposé de manière coaxiale avec le vilebrequin (4a).

2. Dispositif d'ajustement d'angle de carrossage (1) selon la revendication 1, **caractérisé en ce que** :
la partie de réduction de vitesse (3) a :
un engrenage externe (3b) supporté par la carrosserie de véhicule (20),
un planétaire (3c) couplé, de manière coaxiale, à l'arbre de sortie (2b),
un engrenage planaire (3d) s'engrenant avec l'engrenage externe (3b) et le planétaire (3c) et mobile autour du planétaire (3c), et
un élément de sortie (3j) qui est couplé, de manière coaxiale, au vilebrequin (4a) de la partie de manivelle (4) et qui tourne en réponse au mouvement de l'engrenage planétaire (3d).

3. Dispositif d'ajustement d'angle de carrossage (1) selon la revendication 1 ou 2, **caractérisé en ce que** :
l'élément d'entraînement (2) a un diamètre externe supérieur à celui de la partie de réduction de vitesse (3), et
l'élément d'entraînement (2) a une longueur, dans la direction de l'arbre de sortie, plus courte que la partie de réduction de vitesse (3).
